# EUROPEAN PATENT APPLICATION

(11) **EP 2 206 434 A1**
(43) Date of publication of application: **14.07.2010**
(21) Application number: 09165116.6
(22) Date of filing: 10.07.2009
(51) Int. Cl.: A21D 13/00, A23C 1/00, A23L 1/00, A23L 1/10, A23L 1/164, A23C 19/00, A23C 19/032, A23L 1/307

(54) **high nutritional value snack food and a method for producing the same**

(30) Priority: 20.12.2008 WO PCT/IB2008/055476
(71) Applicant: Latvijas Universitate, 1586 Riga (LV); Arstu Konsultativais Dienests, SIA, 1010 Riga (LV)
(72) Inventor: Babarikins, Dmitrijs, LV-1010, Riga (LV); Barkane, Irina, LV-1021, Riga (LV); Babarikina, Anna, LV-1010, Riga (LV); Sisenis, Gundars, LV-3457, Kazdangas pagasts (LV); Roga, Ritvars, LV-3456, Aizpute (LV)
(74) Representative: Fortuna, Jevgenijs

(57) **Abstract**

Invention pertains to the field of producing snack food, particularly to high nutritional value cheese and bread chips-like snack composition and a method of producing the same. The composition of the offered snack is as follows (in weight %): crumbs of dried bread, preferably white bread - 18.70-19.00%, cheese product - 36.66-36.80%, refined vegetable oil, preferably rapeseed oil - 7.25-8.9%, water - 34.30-36.61%, vitamin C - 0.01%, seasonings (dried dills or garlic) - 0.05-0.15%, common salt substitute - 0.68-0.84% (preferably 0.68%). The method of production comprises a step of adding grated cheese product to carbohydrate ingredients, adding vegetable oil-in-water emulsion, stirring the mixture obtained, thermal treating of the product followed by cutting into plates and cooling. The characteristic feature of the method is use of specific cheese product instead of cheese. The cheese product contains 33.6-34.4% proteins, 3.0-3.5% fats and 52.4-57.0% moisture. Crumbs of dried white bread are used as source of carbohydrates. The method provides use of normalized low fat content milk, which is fermented by using milk clotting enzyme derived from fermentation process of the fungus *Rhizomucor miehei* and bacterial starter consisting of mesophilic lactic acid streptococci. The final product (snack) complies with requirements recommended for children, it is rich, delicious and crispy.

## Description

### Technical field

Invention pertains to manufacturing snacks, particularly compositions and methods for producing cheese and bread like crisps (chips) having high nutritional value.

### Background Art

Producing snacks is a fast expanding field of activity worldwide. Consumption of snack food increases in children and adolescent populations as well as among adults. This affects human eating habits by increasing energetic value, content of fat, easy digestible carbohydrates and sodium chloride (common salt) (Weker H. et al. Models of feeding for healthy children. Med. Wieku Rozwoj., 2000, 4, 3, Suppl. 1, 25-34). In the last 20 years because of sedentary life style and some socio-economic and psychological factors fast increase in frequency of obesity, cardiovascular diseases and other pathologies has been observed which has already reached epidemic character and has been associated with consumption of "fast food" (Isganaitis E., Lusting R.H. Fast food, central nervous system insulin resistance and obesity. Arterioscl. Thromb. Vasc. Biol., 2005, 25, 2451).

According to data of the study ( 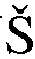 irina J., Zari 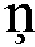 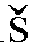 Z. Latvijas iedzi̅vota̅ju uzturvielu daudzuma sali̅dzina̅jums 1996.-2000. gada̅ un 2004. gada̅. RSU 2008. gada zina̅tniska̅s konferences te̅zes, 58.1pp.) animal origin fat content of food used by Latvian people is increasing and the content of unsaturated fatty acids is decreasing. Data from other countries also show rather high consumption of animal fat in population of children of 4-18 years of the age mostly because of use of rich aromatic diary products (Kranz S. et al. Children's diary intake in the United States: too little, too fat. J. Pediatr., 2007, 151, 6, 642-646).

According to medical examination data on children in 183 institutions performed by other authors consumption of common salt is higher than recommended by WHO contributing to development of hypertonic disease and frequency of strokes (Guidelines 2007. Guidelines for the Management of Arterial Hypertension. The Task Force for the Management of Arterial Hypertension of the European Society of Hypertension (ESH) and of the European Society of Cardiology (ESC). Mancia G. et al. J. of Hypertension, 2007, 25, 1105-1187; J.S. Kim, S. Choi-Kwon. Risk Factors for Stroke in Different Levels of Cerebral Arterial Disease. Eur. Neurol. 1999, 42, 150-156, Szponar L. et al. Sodium chloride in food rations and dinners in mass catering institutions. Rocz. Paustw. Zakl. Hig., 2001, 52, 4, 285-293). Eating salted food in turn stimulates consumption of sweetened drinks resulting in obesity. Reducing use of common salt twice results in decrease of purchasing of sweetened soft drinks on average by 2.3 bottles per week. (He F.J. et al. Salt intake is related to soft drink consumption in children and adolescent: a link to obesity? Hypertension, 2008, 51, 3, 629-634).

Optimization of range of carbohydrates in food in general as well as in snack food plays important role in the increase of heartiness of food. The trend to decrease the content of easy digestible carbohydrates, mostly mono- and disaccharides, is welcomed. By doing this ability of the food to increase the blood glucose level and overload insulin-dependant processes is decreased (Livesey S. et al. Glycemic response and health - a systematic review and meta-analysis: relations between dietary glycemic properties and health outcomes. Ann.J.Clin.Nutr., 2008, 87, 1, 258S-258S). Carbohydrates of equal doses but of different source affect blood glucose and insulin level differently in healthy subjects: load from bread is lower than from potatoes (Wolever T.M.S., Bolognesi C. Source and amount of carbohydrate affect postprandial glucose and insulin in normal subjects. J.Nutr., 1996, 126, 2798-2906). This fact leads to desirability to use bread in producing snacks. However potatoes are still more used in manufacturing snacks.

Another frequently used ingredient in producing snacks is cheese. Cheese is used as flavouring additive or as basic ingredient. Cheese is rich in proteins, minerals especially calcium. Equally it is traditionally oversaturated with salt and biologically inferior fats.

There are known methods for producing cheese snacks where nuts, meat, vegetables, cereals and other ingredients are added to fatty cheese (patent JP2039849, publ. date 08.02.1990; patent JP55150844, publ. date 25.11.1980; pat. application US2005031758, publ. date 10.02.2005).

There are known technologies for producing smoked cheese bits and flakes (patent EP0813818, publ. date 17.02.2002). For improvement of texture, product treatment in microwave oven is provided (patent US4803090, publ. date 07.02.1989; pat. appl. FR2750015, publ. date 26.12.1997). Very tender texture of the snack is provided by method of melting the cheese using emulgators, fats, oils and drying (patent JP3010639, publ. date 18.01.1991; pat. appl. JP11276070, publ. date 12.10.1999). Heartiness of cheese snacks is increased by enriching the product with vitamin A and calcium (pat. appl. JP62232333, publ. date 12.10.1987). However the methods mentioned above can not provide highly nutritional and wholesome products. The compositions described before do not conform with requirements of healthy food, because of their minimum protein content.

Several inventions have been devoted to attempts to optimize carbohydrate profile of snacks. Product in the shape of sandwich is known: melted cheese is put between crackers (patent EP1022953, publ. date 27.06.2001), another solution to use popcorn instead of crackers is known (patent EP0423650, publ. date 03.03.1993). Use of bread crumbs as a source of carbohydrates making the sausage like product is known (pat. appl. DE4301115, publ. date 21.07.1994). The case for snack with cheese filling is made from microwave treated rice flour and potato flakes containing up to 30% starch (patent US5405625, publ. date 11.04.1995).

The method for producing snack from cheese and bread having ham additive is known (pat. appl. DE19533074 A1, publ. date 07.09.1995). According to this invention hot cheese and the salt facilitating the cheese melting process (phosphates and/or citrates) is added to a mixture of ham and bread crumbs, the composition is stirred and cooled. The product thus obtained contains 40% of animal fats and 2% of common salt. The content of animal fats and salt do not satisfy requirements of healthy food. Overconsumption of fats and common salt is known to have undesirable effects on health facilitating development of cardiovascular diseases, type 2 diabetes and ageing of the body (Denny A. An overview of the role of diet during the ageing process. Br.J.Community Nurs., 2008, 13, 2, 58-67).

Although phosphates are widely used as preservatives in manufacturing soft drinks (e.g., *Cola*) and other food products, their use in manufacturing food may cause health problems. Diet of modern people is already oversaturated with phosphates (Takeda E. et al. The regulation and function of phosphates in the human body. Biofactors, 2004, 21, 1-4, 345-355). Phosphate residue in diet facilitates development of secondary deficiency of calcium, osteoporosis, as well as iron-deficient anemia, because phosphates with certain cations make water-insoluble salts and disturb absorption of minerals.

Because of special harm of beef fat there have been attempts to modify fat content and chemical content of cheese snacks. It was done by drying cheese until 0-2% moisture content, adding some oils (patent EP0751713, publ. date 17.02.2002). However this method does not reduce animal fat content of the product.

There is known a method for producing a snack food with high protein content (patent application DE2925372A1, publ. date 08.01.1981), which is based on well known process of mixing cheese mass and flour with subsequent drying of the product. This technology ensures production of snack rich in protein. However the saturation of unhealthy animal fat is increasing during the process of manufacturing of the snack food product under this technology. As a result the final snack product is not only rich in protein, but also has high saturation of unhealthy animal fats.

Attempts to create cheese snacks having reduced fat level are described in European patent application EP 0750843 A2 (publ. date 02.01.1997). The cheese filling described in this document may be used for producing flavor based snacks (crackers, waffles, etc.). However the products so obtained contain over residue of carbohydrates.

Cheese snacks presently available on market are characterized by low content of proteins (about 5g/100g), dominance of carbohydrates (about 50g/100g) and fatty composition containing 28-48% of saturated fatty acids (see Table 1).

**Table 1: Chemical content of some fast snacks in g per 100g of product (according to manufacturers data)**

| Product, manufacturer | Proteins | Total fat/saturated fatty acids. % of satur. fatty acids from total fat | Carbohydr ates/incl. sugars | Sodium chloride |
|---|---|---|---|---|
| *Ma̅jas* 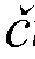 *ipsi ar ma̅rrutkiem ABP CHIPS GROUP,* AS LATFOOD | 5 | 30/not indicated | 59/not indicated | 1.4 |
| | | | | |
| *I̅stie A̅da* 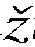 *u* 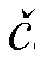 *ipsi ar sieru, ABP CHIPS GROUP,* AS LATFOOD | 5 | 32/not indicated | 54/not indicated | 1.4 |
| | | | | |
| *Pringles* 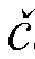 *ipsi with cheese taste, Procter & Gamble Manufacturing, Belgium* | 5 | 35/10 28.6% | 48/3.5 | 1.81 |
| | | | | |
| *Estrella potato chips with sour cream and cheese,* AB Kraft Foods Lithuania | 5.2 | 33.5/15 44.8% | 52.5/3.5 | 1.91 |
| | | | | |
| Optima potato chips with dill taste, Poland | 4.5 | 26.8/not indicated | 61.7/not indicated | Not indic. |
| | | | | |
| *HOPS potato chips with cheese and onion taste,* Belprodukt, Belarus | 6.5 | 30/not indicated | 52.5/not indicated | Not indic. |
| | | | | |
| Potato plates with cheese and onion taste, "Pe̅rnes L", Latvia | 6 | 30/not indicated | 52/not indicated | Not indic. |
| *Lays potato chips with cheese taste,* Poland | 6 | 30/14 46.7% | 57/ 2.5 | 2.03 |
| | | | | |
| *Potato chips with cheese and onions*, Lithuania | 0.26 | 48.2/not indicated | 45.85/not indicated | Not indic. |
| | | | | |
| *Cheetos corn snacks with cheese and ketchup taste,* Poland | 6 | 27/9 33.3% | 59/5.5 | 2.79 |

### Disclosure of the invention

The purpose of the invention is to elaborate snack with high nutritional value having shape similar to well-known fast food snacks which has increased level of proteins, optimized carbohydrate content, enriched with vitamin C, unsaturated fatty acids, reduced level of animal fat, less content of sodium chloride comparing to other snacks however retaining salty taste and minimum other food additives.

Experimentally the following ingredients were chosen for the new product: cheese (cheese product), white bread, vegetable oil (e.g. rapeseed oil, olive oil), "common salt" with reduced content of sodium chloride, seasonings (dried dills, garlic), ascorbic acid. In order to meet requirements of high nutritional value product, hard cheese with low fat content and without common salt should be used. However cheese having these characteristics has not been produced. Therefore a special technology for producing cheese product is offered.

The elaborated technology for producing cheese product is mainly based on known technology for producing hard cheese with second heating of curd at low temperature, namely, technology of producing variety Rossiyski cheese (see Interstate standard. Cheese Rossiyski. Technical regulations - GOST 11041-88: Tekhnologiya sira: Spravochnik / G.P.Shiler - M.: Legkaya i pishevaya promishlennost, 1984). However, the raw material used is milk with reduced fat content (about 0.6%), as well as milk clotting enzyme derived from a fermentation process of the fungus *Rhizomucor miehei* (e.g. the one currently available in the market under the trademark "Fromase 2200 TL") and bacterial starter consisting of mesophilic lactic acid streptococci (e.g., S. lactis CHEN-22). Purified milk kept for 10-14 hours at temperature 10-12°C is normalized in order to obtain the product having determined characteristics. Milk pasteurization is performed at 73-82°C for 20-25 seconds. After that milk is cooled till clotting temperature. The milk clotting enzyme derived from a fermentation process of the fungus *Rhizomucor miehei* (1,95-2,10g, preferably 2,00g per 100 kg of milk) and bacterial starter consisting of mesophilic lactic acid streptococci (e.g., S. lactis CHEN-22) - 2,90-3,15g, preferably 3,00g per 100 kg of milk is added to the cheese product. Milk clotting is performed for 25-30 minutes at temperature 32-34°C. The obtained curd is cut, broken up and kneaded for 10-15 minutes in order to obtain grains 7-8 mm in diameter and to dehydrate the curd. 30% of the whey is removed. To expedite dehydration second heating of the curd is performed at temperature 38-42°C for 15-30 minutes. Kneading of the cheese product grains after second heating of curd is performed for 30-50 minutes. Product dehydration and normalization is also performed. The acidity level (pH 5,2-5,6) during the process of producing of the cheese product grains is controlled by dilution of whey by water in the amount of 5-20%. The size of the grains at the end of their treatment is 4-5 mm. The ready grains are introduced into the device for formation of layer of the cheese mass for 15-30 minutes and its cutting. The obtained pieces of cheese product are allowed to be pressed for 25-30 minutes under the influence of their own weight. Ripening conditions - 45-75 days at the temperature 10^{°}C. Addition of sodium chloride and other sodium, potassium and calcium salts, as well as coating the product in polymer film is excluded from the process. After ripening the product is stored at the temperature -20^{°}C.

The content of the cheese product obtained by the process described above is as follows: proteins 33.6% - 34.4% (preferably 34.0%), fat - 3.0 - 3.5% (preferably 3.2%), moisture - 52.4% - 57.0% (preferably 55.6%). Fat content of the standard Rossiyski cheese (native product) is no less than 50%.

For production of the proposed snack the fine grated cheese product is used, preferably the fraction of fine grated frozen cheese product.

The use of the cheese product described before substantially improves nutritional value of fats and heartiness of the snack. Because of the invented technical solution the content of animal fats containing mostly saturated fatty acids was reduced 15 times. Refined rapeseed oil of the first pressing having biologically valuable content was used instead of milk fats. The content of rapeseed oil is: saturated fatty acids - 7%, monounsaturated - 60%, unsaturated fatty acids of longer chain - 33%. For comparison the milk fats contain saturated fatty acids - 57%, monounsaturated - 32%, other unsaturated fatty acids - 5%.

Use of rapeseed oil having characteristics described before provides production of valuable snacks, as well as reduces feasibility of formation of carcinogenic compounds during the production process because the rapeseed oil forms smoke at higher temperature (220 C).

Carbohydrate ingredient of the new snack is dried and grated bread (preferably white bread) in a form of crumbs. During elaboration of the composition several varieties of white bread were tested - "Veseli̅bas" bread containing bran, toaster bread ("Hanzas maizni̅ca"), wheat toaster bread ("Fazer") and toaster bread with bran ("Druva"), as well as dried, grated bread. The conclusion was that the quality of the snack does not depend on variety of white bread, however bread containing bran additive should not be used.

As mentioned before the main seasoning of "classical" fast food snacks is salt, which when excessively used is harmful to the health. Exclusion of the salt from the composition of the new product would result in waving the use of salt by consumers. It should be noted that according to Latvian legal acts distribution of food containing more than 1.25% of salt in children institutions is prohibited. Almost all fast food snacks on the market infringe these requirements (see Table 1).

For solution of the problem of "common salt" a method of enhancement of salty taste was used. The method comprises reduction of sodium chloride partially replacing it with other food salts - potassium chloride and magnesium sulphate. Presently on European Union market "common salt" with reduced content of sodium chloride is available (e.g., *Pansalt*, Oriola, Finland, food salt *Ekstra*, TVIN, Belarus). These products are recommended to persons with hypertension and nephropathies. These compositions mostly contain NaCl, KCl, MgSO₄, as well as amino acids, citric acid, etc. The offered snack product contains NaCl, KCl and MgSO₄, which are allowed for use in food manufacturing.

It should be emphasized that potassium and magnesium ions in the new product fulfill two functions: provide "salty" taste and enhance biological value of the snack. K⁺ and Mg⁺ ions which people usually intake by fruits and vegetables, perform significant role in the regulation of cardiac, muscular and nervous system functions (Wu G. et al. Potassium magnesium supplementation for four weeks improves small distal artery compliance and reduces blood pressure in patients with essential hypertension. Exp. Hypertens., 2006, 28, 5, 489-97). Presently many people suffer from deficiency of potassium and magnesium, because diet ration of many people is characterized by inadequately low consumption of fruits and vegetables (Joffe M., Robertson A. The potential contribution of increased vegetable and fruit consumption to health gain in the European Union. Public Health Nutr., 2001, 4, 893-901). This explains presence of big number of food supplements containing minerals on shelves of food shops and pharmacies.

The new product contains the following composition of salt substitutes: NaCl - 70%, KCl - 20%, MgSO₄.7H₂O - 10%. This composition provides salty taste while having 30% less content of sodium chloride comparing to common salt. Ascorbic acid is added in order to result in level of 20 mg in 100g of final product. Ascorbic acid should be added by 20% more because vitamin C partially decomposes during thermal treatment.

The production of the offered snack comprises the following steps:
a) producing the cheese product,
b) grating the frozen cheese product,
c) preparing vegetable oil-in-water emulsion, preferably, the rapeseed oil-in-water emulsion
d) mixing the cheese product with crumbs of bread, preferably, white bread,
e) adding vegetable oil-in-water emulsion, preferably, the rapeseed oil-in-water emulsion,
f) adding seasonings (dried dills, garlic) and vitamin C,
g) stirring the mixture obtained,
h) transferring the mixture to waffle pan or other frying device and performing thermal treatment at the temperature 180-190^{°}C for 0.5-1.2 minutes,
i) cutting the product into 0,5-7mm, preferably, 1-2 mm thin plates followed by cooling,
j) pouring powdered salt substitute onto the ready product in the amount not exceeding 1.6 g per 100 g of the product.
The ready product is hermetically sealed.

In another embodiment of the invention seasonings are added after cutting the product into plates. In yet another embodiment of the invention the product is being cut into plates before performing its thermal treatment.

The composition of the snack is as follows (in weight %):
- crumbs of dried bread (white bread).....18.70-19.00% (preferably 18.80%),
- cheese product .....36.66-36.80% (preferably 36.75%),
- vegetable oil (refined rapeseed oil) .....7.25-8.9% (preferably 7.35%),
- water .....34.30-36.61% (preferably 36.33%),
- vitamin C .....0.01%,
   seasonings (dried dills or garlic) .....0.05-0.15% (preferably 0.08%)
   common salt substitute .....0.68-0.84% (preferably 0.68%) - poured onto the prepared product.
   Frying temperature ..... 180-190^{°}C (preferably 185^{°}C).
   Frying time ..... 0.5-1.2 min (preferably 1 min).

The final outcome of the production according to the composition mentioned above in average is 42% of the raw materials. Adding vitamin C to the mixture of ingredients, it is taken into account that about 20% of vitamin is decomposed during thermal treatment.

The final product is light yellow, crispy, salty plates with cheese/baked bread taste and relevant seasoning's flavour. The product is characterized by higher protein, nutritionally valuable fats and salt content which complies with recommended standards for children. Table 2 shows chemical content of the offered snack.

**Table 2: chemical content of the invented fast food snack in g/100g of the final product***

| Proteins | Total fat/saturated fatty acids. % of satur. f.a. from total fat | Carbohydrates/inc 1. sugars | Sodium chloride |
|---|---|---|---|
| 42.5 | 20.3/4.00 19.7% | 32.4/1.46 | 1.00 |

| | | | |
|---|---|---|---|
| *Not counting water and other components | | | |

### Examples of implementation of the invention

### Example 1

Cheese product used in production of high nutritional value snack is prepared. The cheese product is prepared using technology partially based on known technology for producing variety Rossiyski cheese. As raw materials of the cheese product milk with reduced fat content (0.5%). Purified milk kept for 12 hours at temperature 12°C is normalized. Milk pasteurization is performed at 76°C for 20 seconds. After that milk is cooled till clotting temperature 32°C. The milk clotting enzyme derived from a fermentation process of the fungus *Rhizomucor miehei* (2,00g per 100 kg of milk) and bacterial starter consisting of mesophilic lactic acid streptococci (S. lactis CHEN-22) - 3,00g per 100 kg of milk is added to the cheese product. Milk clotting is performed for 27 minutes. The obtained curd is cut, broken up and kneaded for 15 minutes in order to obtain grains of about 7 mm in diameter and to dehydrate the curd. 30% of the whey is removed. The second heating of the curd is performed at the temperature 42°C for 25 minutes. Kneading of the cheese product grains after second heating of curd is performed for 40 minutes. Subsequent product dehydration and normalization is also performed. The acidity level in the process of producing of the cheese product grains is controlled by dilution of whey by water in the amount of 10%. The size of the grains at the end of their treatment is about 4-5 mm. The ready grains are introduced into the device for formation of layer of the cheese mass for 20 minutes and its cutting. The obtained pieces of cheese product are allowed to be pressed for 30 minutes under the influence of their own weight. Ripening conditions - 45 days at the temperature 10^{°}C. After ripening the product is stored at the temperature -20^{°}C. The content of the cheese product obtained by the process described above is as follows: proteins 34.0%, fat - 3.2%, moisture - 55.6%.

### Example 2

In preparation of high nutritional value snack 69.84g of grated cheese product (obtained by the method of the Example 1) is added to 35.81g of crumbs of dried white bread, mixture is stirred, emulsion of rapeseed oil-in-water (13.81g and 69.75g respectively) is added. Vitamin C (25mg), dried dills (0.1g) are added, stirred and laid on the waffle pan as a thin layer. Preparation is fried 1 minute at the temperature 185^{°}C. Fried product is cut into 1-2 mm thin plates and cooled. Substitute of common salt is powdered and poured onto ready product in amount of 1.3g per 100g of chips. Such proportion ensures salty taste of the product and the amount of the sodium chloride 1.0g/100g which does not exceed a dose recommended for children consumption (1.25g per 100g). The product obtained is rich, delicious, crispy, especially if fried on riffled surface.

### Example 3

In another variant of the implementation of invention dried crumbs of white bread (36.20g) are mixed with grated cheese product (70.11g) obtained according to the Example 1, emulsion of rapeseed oil-in-water (16.96g and 65.35g respectively), vitamin C (25mg), dried garlic (0.29g) are added. The mixture is stirred and passed as a thin layer between two hot cylindrical surfaces for 1 min at the temperature 185^{°}C. The fried product is cut into round or other shape pieces and cooled. Substitute of common salt is powdered and poured onto ready product in amount of 1.6g per 100g of chips. The product so obtained contains 1.25g sodium chloride per 100g of chips. The texture of the product is tenderer than of the product obtained according to Example 2.

## Claims

1. A method for producing high nutritional value snacks on the base of cheese and bread comprising adding grated cheese product to carbohydrate ingredients, adding vegetable oil-in-water emulsion to the mixture of the grated cheese product and carbohydrate ingredients, stirring the mixture obtained, thermal treating of the product followed by cutting into plates and cooling, **characterized in that** instead of cheese the grated cheese product is used which contains 33.6-34.4% (preferably 34.0%) proteins, 3.0-3.5% (preferably 3.2%) fats, 52.4-57.0% (preferably 55.6%) moisture, at that dried crumbs of bread, preferably white bread, are used as carbohydrate ingredient.

2. The method according to claim 1, **characterized in that** at the step of thermal treating the product is fried at the temperature 180-190^{°}C, preferably 185^{°}C for 0.5-1.2 min.

3. The method according to claim 1 or 2, **characterized in that** the cheese product is obtained from normalized low fat content milk using milk clotting enzyme derived from fermentation process of the fungus *Rhizomucor miehei* and bacterial starter consisting of mesophilic lactic acid streptococci providing ripening of the cheese product.

4. The method according to claim 3, **characterized in that** the cheese product after ripening and before grating step is frozen.

5. The method according to any claim from 1 to 4, **characterized in that** in the step of adding vegetable oil-in-water emulsion the rapeseed oil-in-water emulsion is added to the mixture.

6. The method according to any claim from 1 to 5, **characterized in that** after adding the vegetable oil-in-water emulsion to the mixture of the grated cheese product and carbohydrate ingredients, vitamin C is added.

7. The method according to any claim from 1 to 6, **characterized in that** after adding the vegetable oil-in-water emulsion to the mixture of the grated cheese product and carbohydrate ingredients or after cooling of the ready product, powdered common salt substitute with or without seasonings is added to the product not exceeding dose of common salt substitute of 1.6g per 100g of the product.

8. The method according to any claim from 1 to 6, **characterized in that** after adding the vegetable oil-in-water emulsion to the mixture of the grated cheese product and carbohydrate ingredients, seasonings, for example dried dills or garlic, are added.

9. Snack product of high nutritional value based on cheese and bread produced by the method according to any claim from 1 to 8, **characterized in that** the composition of the snack is as follows (in weight %):
crumbs of dried bread, preferably white bread - 18.70-19.00% (preferably 18.80%),
cheese product - 36.66-36.80% (preferably 36.75%),
refined vegetable oil, preferably rapeseed oil - 7.25-8.9% (preferably 7.35%),
water - 34.30-36.61% (preferably 36.33%),
vitamin C - 0.01%,
seasonings (dried dills or garlic) - 0.05-0.15% (preferably 0.08%)
common salt substitute - 0.68-0.84% (preferably 0.68%).

## Amended claims

### Amended claims in accordance with Rule 137(2) EPC.

**1.** A method for producing high nutritional value snacks on the base of cheese and bread comprising adding grated cheese product to carbohydrate ingredients, adding vegetable oil-in-water emulsion to the mixture of the grated cheese product and carbohydrate ingredients, stirring the mixture obtained, thermal treating of the product followed by cutting into plates and cooling, **characterized in that** instead of cheese the grated cheese product is used which contains 33.6-34.4%, preferably 34.0% proteins, 3.0-3.5%, preferably 3.2% fats, 52.4-57.0%, preferably 55.6% moisture, wherein dried crumbs of bread, preferably white bread, are used as carbohydrate ingredient.

**2.** The method according to claim 1, **characterized in that** at the step of thermal treating the product is thermally treated on a waffle pan or between two hot cylindrical surfaces at the temperature 180-190°C, preferably 185°C for 0.5-1.2 min.

**3.** The method according to claim 1 or 2, **characterized in that** the cheese product is obtainable from normalized low fat content milk using milk clotting enzyme derived from fermentation process of the fungus *Rhizomucor miehei* and bacterial starter consisting of mesophilic lactic acid streptococci providing ripening of the cheese product.

**4.** The method according to claim 3, **characterized in that** the cheese product after ripening and before grating step is frozen.

**5.** The method according to any claim from 1 to 4, **characterized in that** in the step of adding vegetable oil-in-water emulsion the rapeseed oil-in-water emulsion is added to the mixture.

**6.** The method according to any claim from 1 to 5, **characterized in that** after adding the vegetable oil-in-water emulsion to the mixture of the grated cheese product and carbohydrate ingredients, vitamin C is added.

**7.** The method according to any claim from 1 to 6, **characterized in that** after adding the vegetable oil-in-water emulsion to the mixture of the grated cheese product and carbohydrate ingredients or after cooling of the ready product, powdered common salt substitute with or without seasonings is added to the product not exceeding dose of common salt substitute of 1.6g per 100g of the product.

**8.** The method according to any claim from 1 to 6, **characterized in that** after adding the vegetable oil-in-water emulsion to the mixture of the grated cheese product and carbohydrate ingredients, seasonings, for example dried dills or garlic, are added.

**9.** Snack product of high nutritional value based on cheese and bread produced by the method according to any claim from 1 to 8, **characterized in that** the ingredients ratio of the snack is as follows, in weight %:
crumbs of dried bread, preferably white bread - 18.70-19.00%, preferably 18.80%,
cheese product - 36.66-36.80%, preferably 36.75%,
refined vegetable oil, preferably rapeseed oil - 7.25-8.9%, preferably 7.35%,
water - 34.30-36.61%, preferably 36.33%,
vitamin C-0.01%,
seasonings - dried dills or garlic - 0.05-0.15%, preferably 0.08%,
common salt substitute - 0.68-0.84%, preferably 0.68%.
